# FASCICULE DE BREVET EUROPEEN

(11) **EP 1 462 012 B1**
(45) Date de publication et mention de la délivrance du brevet: **03.08.2005**
(21) Numéro de dépôt: 03370007.1
(22) Date de dépôt: 25.02.2003
(51) Int. Cl.: A23N 15/00

(54) **Dispositif et procédé pour étrogner et éclater des choux**
Vorrichtung und Verfahren zum Entfernen des Kernes und zum Spreizen der Blümchen von Blumenkohl
Device and process for removing the core and breaking into florets of cauliflower

(43) Date de publication de la demande: 29.09.2004
(73) Titulaire: Delecroix, Denis, 59173 Blaringhem (FR)
(72) Inventeur: Delecroix, Denis, 59173 Blaringhem (FR)
(74) Mandataire: Hennion, Jean-Claude

(56) Documents cités:
- US-A- 1 766 824
- US-A- 3 754 470
- US-A- 4 099 456
- DATABASE WPI Section Ch, Week 199030 Derwent Publications Ltd., London, GB; Class D14, AN 1990-230674 XP002248369 & SU 1 537 204 A (PLATONOV V A), 23 janvier 1990 (1990-01-23)

## Description

L'invention se rapporte au domaine technique des machines pour parer des choux-fleurs, brocolis et autres légumes équivalents.

Par brocoli, on désigne communément tous les choux-fleurs à pommes colorées (pourpre, vert), et notamment Brassica olerarea, variété botrytis sous variété cymosa. Les brocolis sont consommés depuis longtemps. Désignés sous le terme « calabrese » en Grande-Bretagne, ils sont connus depuis le 16^{ème} siècle et produits de nos jours à raison de 18 000 tonnes par an en France, essentiellement dans leur variété à pomme verte.

Généralement, dans une tête de chou-fleur ou de brocoli, on ne mange que l'inflorescence, appelée tête ou pomme et formée de fleurettes.

Le trognon, parfois appelé coeur est éliminé lors de l'étrognage de même que les feuilles qui sont éliminées par effanage.

En particulier, dans la commercialisation des choux-fleurs ou brocolis surgelés, ce sont surtout les inflorescences, appelées fleurettes qui présentent de l'intérêt, le trognon étant peu comestible.

Il est donc préférable, avant de procéder à la surgélation du choux-fleur, d'en éliminer le trognon.

Les fabricants de plats surgelés souhaitent pouvoir disposer de très grandes quantités de fleurettes prêtes à cuisiner, c'est à dire des fleurettes de taille suffisamment faible pour être cuisinées (on parle ainsi d'éclatement des têtes de choux-fleures en fleurettes).

Les choux-fleurs et brocolis sont très fragiles et lorsqu'ils sont abîmés lors de leurs récolte ou de leur transformation, ils deviennent souvent impropres à la vente, voire à la consommation.

C'est pourquoi pour l'heure la découpe des fleurettes des brocolis est encore souvent réalisée à la main, ce qui est coûteux et fastidieux.

Il a été tenté depuis longtemps de mécaniser l'étrognage et la découpe des fleurettes de chou-fleur ou brocolis.

Selon un premier type de montage antérieur, deux lames de scie circulaire découpent dans le chou un morceau en forme de coin attenant au trognon, celui-ci se trouvant ainsi extrait en totalité du chou par l'action des deux scies. Un tel procédé entraîne le plus souvent une détérioration des fleurettes et ne permet pas leur séparation mutuelle. Pour ce premier type de montage, on peut se référer, par exemple, au document FR-A-2 380 714.

Selon un deuxième type de montage antérieur, illustré par le document FR-A-2 410 967, le chou-fleur est entraîné dans une coupelle jusque vers un poste de travail où il est placé sous trois lames en acier de forme conique, ces trois lames convergeant vers le centre de la coupelle pour former en fin de course un cône, isolant le trognon du chou-fleur des fleurettes. Le chou-fleur est posé sur les coupelles, trognon vers les lames convergentes.

Selon un troisième type de montage antérieur, illustré par les documents FR-A-2 668 337 et EP-A-483 006, les brocolis sont tenus fleurettes vers le bas par des pinces montées sur carrousel, un premier couteau à mouvement latéral par rapport au trognon venant étêter le brocoli. Un tel montage s'avère de réglage complexe et la séparation des fleurettes est assez aléatoire, en dépit de la mise en place d'un deuxième couteau horizontal venant couper la ou les fleurettes centrales restantes sur les tiges, ainsi qu'il est proposé dans ce document FR-A-2 668 337.

Selon un quatrième type de montage antérieur, illustré par exemple par le document FR-A-2 746 262, le chou-fleur est pressé contre une pièce support comportant un élément central creux, pour l'élimination du trognon, élément central autour duquel sont disposés une pluralité de lames découpant les fleurettes en quartiers.

Selon un cinquième type de montage antérieur, un cylindre à bord coupant, dont le diamètre est en moyenne celui des trognons, est passé à travers un chou-fleur dans l'axe du trognon. Ce cylindre de carottage est conventionnellement disposé au-dessus des choux posés sur des coupelles. Par un tel procédé, on n'obtient pas automatiquement la séparation des fleurettes en bouquets.

Selon une variante de ce cinquième type de montage antérieur, illustrée par le document FR-A-2 376 632, en regard du cylindre à bord tranchant, une ogive à ailettes tranchantes, coaxiale au cylindre tranchant, permet la séparation des fleurettes. Le montage décrit dans le document FR-A-2 376 632 présente l'inconvénient important de découper les fleurettes de manière aléatoire, et de produire ainsi des fuseaux de fleurettes sous forme de petits morceaux irréguliers, ce qui nuit à la présentation du produit et à sa mise en valeur.

Selon une deuxième variante de ce cinquième type de montage, illustrée par exemple par le document FR-A-2 769 180, la découpe des trognons est réalisée par des couteaux mobiles disposés en dessous des choux, le trognon de chaque chou étant placé dans l'ouverture centrale d'une coupelle dans laquelle le chou est maintenu plaqué lors de la découpe de son trognon.

Le document US-3 754 470 décrit une machine pour l'étrognage de choux et la découpe de fleurettes.

Dans ce dispositif antérieur, une bande sans fin porte des coupelles de support des choux fleurs et les amène au droit d'une tête d'étrognage montée sur un plateau vertical tournant.

Deux têtes d'étrognage sont montées sur ledit plateau tournant dont le mouvement est synchrone au déplacement de la bande de convoyage des coupelles.

Chaque tête comprend un axe tournant pourvu à son extrémité d'un couteau et de deux bras agitateurs.

La machine décrite dans ce document US-3 754 470 présente de nombreux inconvénients.

En premier lieu, la tête d'étrognage décrite dans ce document antérieur comprend huit couteaux référencés 130 qui descendent au travers du chou lors de l'étrognage et passent dans des fentes radiales des coupelles support.

Ces couteaux découpent ainsi pratiquement toutes les fleurettes sur toute la hauteur du chou. Or, les fleurettes disposées à la base du chou sont nettement plus grosses que celles situées plus haut sur le trognon.

La machine décrite dans ce document US-3 754 470 de 1973 découpant toutes les fleurettes, sur toute la hauteur du chou, produit des morceaux de fleurettes trop petits pour être acceptés aujourd'hui par les fabricants de plats surgelés notamment.

En deuxième lieu, la tête d'étrognage décrite dans ce document antérieur produit des déchets de coupe qui sont inévitablement mélangés aux fleurettes découpées, ce qui est tout à fait inacceptable pour l'industrie des plats cuisinés : l'étrognage vise à éliminer les parties dures, ligneuses, du chou pour ne conserver que les fleurettes, le mélange de copeaux de trognons avec les fleurettes nécessitant un tri après étrognage, complexe voire impraticable.

En troisième lieu, la forme ajourée des coupelles au travers desquelles passent les couteaux verticaux peut conduire à ce que des copeaux ou morceaux de trognon soient coincés dans les fentes radiales des coupelles ce qui peut nuire au bon positionnement des choux dans les coupelles.

En quatrième lieu, la machine décrite dans ce document antérieur apparaît inadaptée au travail du brocoli.

La particularité du brocoli est de présenter une tige principale et des tiges secondaires terminées par des fleurettes. De sorte que pour parer le brocoli, il est nécessaire de le couper au niveau des tiges secondaires au plus près possible des fleurettes. La découpe optimale doit ainsi présenter une forme demi-sphérique ou ogivale.

Les choux-fleurs présentent au contraire un aspect beaucoup plus compact, le brocoli produisant généralement une inflorescence avec des pédicelles plus minces et plus longs que ceux du chou-fleur. De sorte que les machines connues dans l'art antérieur ne parviennent pas à étrogner ou éclater correctement en fleurettes tant les choux-fleurs que les brocolis.

Différentes variantes de mises en oeuvre des montages présentés ci-dessus peuvent être trouvées dans les documents suivants :
- demande de brevet en France publiée sous le numéro 2 766 334 ;
- demandes de brevet européen publiées sous les numéros 0 244 387, 0 262 747, 0 495 353, 0 552 902, 0 655 891, 0 853 892, 0 953 297 ;
- brevets délivrés aux Etats-Unis sous les numéros 3 320 989, 3 380 500, 3 478 794, 3 478 795, 3 490 506, 3 527 276, 3 612 124, 3 646 977, 3 695 323, 3 886 857, 4 036 123, 4 041 672, 4 095 391, 4 099 456, 4 168 642, 4 176 595, 4 241 096, 4 420 118, 4 455 929, 4 480 536, 4 503 761, 4 601 156, 4 658 714, 4 674 270, 4 773 324, 4 787 305, 5 009 909, 5 074 203, 5 102 678, 5 156 874, 5 168 799, 5 168 801, 5 277 107, 5 470 602, 5 588 278, 5 590 591, 6 036 989 ;
- demandes internationales de brevet publiées sous les numéros 89 01300, 94 26134, 96 13180, 97 13418.

L'invention vise à fournir un procédé et un dispositif permettant l'éclatement à très haute cadence des choux-fleurs, brocolis, choux romanesco, ou tout autre légume à inflorescence équivalent, ce dispositif assurant une séparation des fleurettes en tailles homogènes et suffisamment faibles pour être cuisinées, ce dispositif pouvant être mis en oeuvre sur les lieux de récolte de sorte à éviter les coûts de transport des légumes et des trognons, ce dispositif assurant une séparation aussi complète que possible du trognon et des fleurettes, sans risque de mélange de morceaux de trognon avec les fleurettes.

Le procédé et le dispositif selon l'invention doivent en outre être économiques notamment parce qu'ils :
- ne nécessitent que peu d'interventions manuelles ;
- n'engendrent que très peu de pertes ou d'altérations des fleurettes ;
- évitent le transport des trognons, le coeur des choux-fleurs ou brocolis pouvant représenter de 35 à 50% du poids total du légume ;
- réduisent le temps entre récolte et préparation en vue d'une incorporation en plat cuisiné ou surgelé, les fleurettes parvenant ainsi dans un état de fraîcheur maximal sur les lieux de préparation ou surgélation des aliments.

Enfin, le dispositif selon l'invention doit être de structure mécanique robuste, permettant son utilisation prolongée et intensive, les pièces d'usure étant par ailleurs peu coûteuses, le nettoyage du dispositif étant facile.

A ces fins, invention se rapporte, selon un premier aspect, à un procédé pour l'étrognage et l'éclatement en fleurettes des choux à pommes, l'étrognage du chou étant réalisé par forage alors que le chou est maintenu plaqué dans une coupelle support, le forage étant accompagné d'un carottage.

L'invention se rapporte, selon un deuxième aspect à une machine pour la mise en oeuvre du procédé ci-dessus, comprenant au moins une tête d'étrognage pourvue d'un arbre tournant à partie inférieure munie d'une saillie hélicoïdale tranchante, cette partie inférieure étant logée dans un manchon formant tube plongeur de carottage.

Selon diverses réalisations, la machine présente les caractères suivants, éventuellement combinés :
- l'arbre tournant comprend deux saillies radiales disposées dans un logement ouvert vers le bas, en direction de la saillie hélicoïdale de forage et ouvert latéralement vers un conduit d'évacuation des copeaux ;
- le manchon est pourvu d'au moins une saillie latérale externe de découpe des fleurettes ;
- elle comprend des moyens, tel détecteur fin de course, permettant d'arrêter la descente de la vis de forage et du tube plongeur de carottage à une hauteur prédéterminée par rapport à la tête du chou posée sur une coupelle support.

Par exemple, le tube plongeur et la vis de forage n'iront pas au delà des deux tiers voire des trois quart de la hauteur totale maximum du chou, la demanderesse ayant constaté qu'une descente supplémentaire de la tête d'étrognage provoquerait la découpe de fleurettes qui sont déjà de petite taille, au sommet du chou.

D'autres objets et avantages de l'invention apparaîtront au cours de la description suivante de modes de réalisation, description qui va être effectuée à la lumière des dessins annexés dans lesquels :

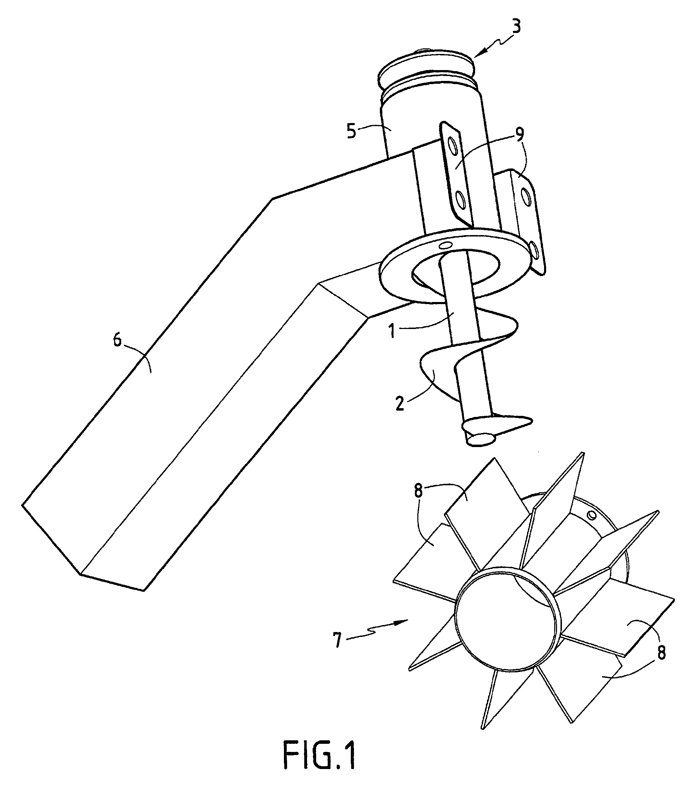

- la figure 1 est une vue en perspective d'une tête d'étrognage de choux selon un mode de réalisation, le tube plongeur à ailettes étant représenté séparément ;

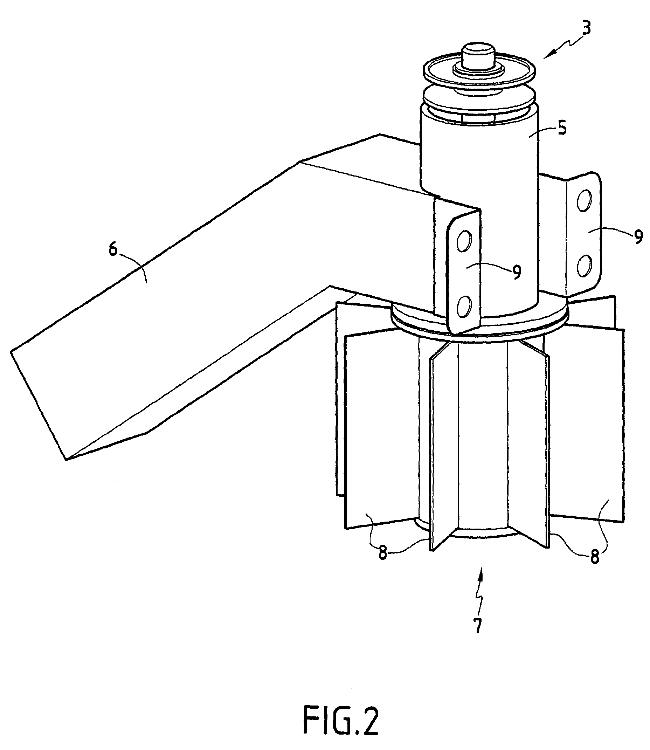

- la figure 2 est une vue analogue à la figure 1, le tube plongeur de carottage étant en position montée ;
- la figure 3 est une vue latérale montrant schématiquement la position d'une tête d'étrognage par rapport à un chou, avant étrognage, le chou étant placé sur une coupelle support montée sur une bande de convoyage, de type conventionnelle, non représentée.

Ainsi qu'il apparaît sur les dessins, la tête d'étrognage comprend un arbre tournant 1 dont la partie extrême inférieure est pourvue d'une saillie hélicoïdale 2 à bord tranchant.

Cet arbre tournant 1 est entraîné par l'intermédiaire d'une chaîne ou d'une courroie, via une poulie supérieure 3.

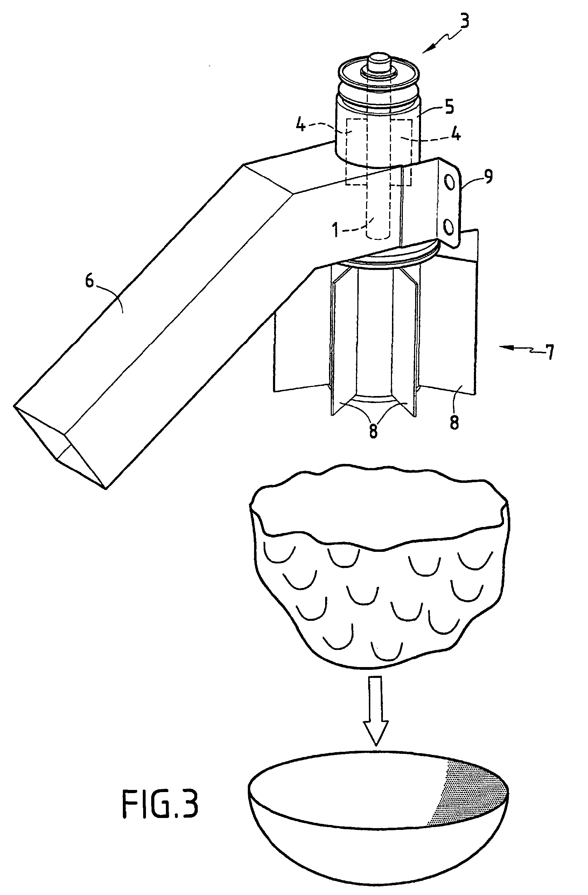

Entre la poulie 3 et la partie extrême inférieure tranchante hélicoïdale 2, l'arbre tournant 1 est pourvu de deux ailettes radiales 4 opposées, dont la position est représentée en figure 3 par transparence.

Ces ailettes 4 tournent dans un logement 5 ouvert vers le bas, en direction du bord hélicoïdal tranchant et ouvert latéralement vers un conduit 6 d'évacuation des copeaux de trognon.

Un manchon tubulaire 7 forme tube plongeur de carottage lorsqu'il est assemblé, par exemple par vissage, autour de l'arbre tournant 1.

Dans la réalisation présentée, ce manchon 7 est pourvu d'ailettes radiales 8 équidistantes et sensiblement identiques.

Une machine d'étrognage peut être pourvue, ainsi qu'il est connu en soi, de plusieurs têtes d'étrognage.

Ainsi, dans la réalisation représentée, la tête est pourvue d'équerres 9 avec perçage facilitant son montage par vissage ou boulonnage sur un plateau vertical tournant, non représenté.

Le fonctionnement est le suivant.

En fonction du type de choux à étrogner (brocolis, romanesco, choux fleurs) et de la taille de ces choux et de leur trognon, notamment diamètre du trognon (les choux fleurs d'hiver étant notoirement beaucoup plus petits que les choux produits en pleine saison), l'homme du métier choisit un diamètre pour le manchon tubulaire 7 et éventuellement pour la vis foreuse 2.

Le diamètre du manchon sera avantageusement sensiblement égal ou légèrement supérieur au diamètre maximum constaté pour le trognon, la vis foreuse ayant un diamètre voisin de celui du manchon.

Ainsi, la machine d'étrognage sera livrée avec des manchons et vis de différents diamètres, le manchon pouvant être avantageusement assemblé sur la tête d'étrognage par des moyens d'assemblage rapide.

Les choux sont placés dans des coupelles entraînées sur une bande de convoyage, ainsi qu'il est connu en soi.

Les choux sont posés à l'envers dans les coupelles et arrivent un à un à la station d'étrognage.

La tête d'étrognage descend alors au travers du chou mais pas sur toute la hauteur de celui-ci.

La demanderesse a en effet constaté que, lorsque le manchon 7 est pourvu d'ailettes 8 pour l'éclatement des choux fleurs, il n'est ni nécessaire ni souhaitable que les ailettes 8 traversent toute la hauteur du chou.

En effet, seules les grosses fleurettes situées à la base du chou ont une taille supérieure à celle recommandée pour l'utilisation dans la préparation de plats surgelés, les fleurettes ayant poussé plus haut sur le trognon à la partie supérieure du chou étant de taille plus modeste, leur découpe entraînant la formation de morceaux trop petits pour être valorisés.

La vis foreuse 2 tournant à l'intérieur du manchon de carottage 7 perce le trognon du chou posé dans la coupelle.

Cette vis foreuse tourne à vitesse élevée, par exemple de l'ordre de trois mille tours par minute.

Les ailettes 4 créent une aspiration des copeaux obtenus par le perçage, ainsi qu'une éjection radiale de ces copeaux vers le conduit d'évacuation 6.

On s'assure ainsi que les fleurettes obtenues par l'éclatement du chou ne sont pas mélangées aux copeaux de trognon.

Compte tenu de la disposition des fleurettes sur une tige de brocolis ou romanesco, la demanderesse a constaté qu'un manchon 7 sans ailette 8 convenait pour l'étrognage de ces choux brocolis ou romanesco, tandis que plusieurs ailettes 8 sont avantageuses pour l'éclatement des choux fleurs, notamment les gros choux fleurs de pleine saison.

La machine pourra être livrée avec des manchons 7 dépourvus d'ailettes, ainsi que des manchons 7 comprenant deux, trois ou plus d'ailettes 8.

La machine d'étrognage pourra comprendre une seule tête ou plusieurs têtes montées sur plateau tournant, du type général connu antérieurement du document US-3 754 470 par exemple.

## Revendications

1. Procédé pour l'étrognage et l'éclatement en fleurettes des choux à pomme, **caractérisé en ce que** l'étrognage du chou est réalisé par forage alors que le chou est maintenu plaqué dans une coupelle support, le forage étant accompagné d'un carottage et d'une aspiration des copeaux.

2. Machine pour la mise en oeuvre du procédé selon la revendication 1, **caractérisée en ce qu'**elle comprend au moins une tête d'étrognage pourvue d'un arbre tournant (1) à partie inférieure munie d'une saillie hélicoïdale tranchante (2), cette partie inférieure étant logée dans un manchon formant tube plongeur de carottage (7).

3. Machine selon la revendication 2, **caractérisée en ce que** l'arbre tournant (1) comprend deux saillies radiales (4) disposées dans un logement (5) ouvert vers le bas, en direction de la saillie hélicoïdale de forage (2) et ouvert latéralement vers un conduit d'évacuation des copeaux.

4. Machine selon la revendication 2 ou 3, **caractérisée en ce que** le manchon (7) est pourvu d'au moins une saillie latérale (8) externe de découpe des fleurettes.

5. Machine selon l'une quelconque des revendications 2 à 4, **caractérisée en ce qu'**elle comprend des moyens, tel détecteur fin de course, permettant d'arrêter la descente de la vis de forage et du tube plongeur de carottage à une hauteur prédéterminée par rapport à la tête du chou posée sur une coupelle support.

## Patentansprüche

1. Verfahren zum Entstrunken und Schneiden in Blümchen von Kohlköpfen, **dadurch gekennzeichnet, dass** das Entstrunken des Blumenkohls durch Bohren erfolgt, wobei der Blumenkohl in einem Trägerschälchen gehalten wird und die Bohrung von einer Kembohrung und einem Absaugen der Späne begleitet ist.

2. Maschine zum Umsetzen des Verfahrens nach Anspruch 1, **dadurch gekennzeichnet, dass** sie mindestens einen Entstrunkkopf umfasst, der mit einer Drehwelle (1) versehen ist, mit einem unteren Abschnitt, der mit einem schraubenförmigen schneidenden Vorsprung (2) ausgestattet ist, wobei der untere Abschnitt in einer Hülse angeordnet ist, weiche ein Tauchrohr (7) zum Kernbohren ausbildet.

3. Maschine nach Anspruch 2, **dadurch gekennzeichnet, dass** die Drehwelle (1) zwei radiale Vorsprünge (4) umfasst, die in einer Ausnehmung (5) angeordnet sind, welche nach unten in Richtung des schraubenförmigen Bohrvorsprungs (2) und seitlich zu einer Leitung für das Abtransportieren der Späne offen ist.

4. Maschine nach Anspruch 2 oder 3, **dadurch gekennzeichnet, dass** die Hülse (7) mit mindestens einem äußeren seitlichen Vorsprung (8) zum Schneiden von Blümchen versehen ist.

5. Maschine nach einem der Ansprüche 2 bis 4, **dadurch gekennzeichnet, dass** sie Mittel umfasst, beispielsweise einen Endstellungsdetektor, welche es ermöglichen, die Abwärtsbewegung der Bohrschraube und des Tauchrohrs für das Kernbohren in einer vorbestimmten Nöhe in Bezug auf den Kohlkopf, der auf einem Trägerschälchen angeordnet ist, zu stoppen.

## Claims

1. Process for coring broccoli or cauliflowers and splitting them into florets, **characterised in that** the vegetable is cored by drilling while it is kept laid in a supporting bowl, the drilling being accompanied by de-coring and sucking out the shavings.

2. Machine for putting the process according to Claim 1 into service, **characterised in that** it includes at least a coring head provided with a rotating shaft (1) with a lower part provided with a cutting helical projection (2), this lower part being housed in a sleeve forming a de-coring plunger tube (7).

3. Machine according to Claim 2, **characterised in that** the rotating shaft (1) has two radial projections (4) arranged in a housing (5) open downwards, in the direction of the helical drilling projection (2) and open laterally towards a shavings dispersal chute.

4. Machine according to Claim 2 or 3, **characterised in that** the sleeve (7) is provided with at least one external lateral projection (8) for cutting out the florets.

5. Machine according to any one of the Claims 2 to 4, **characterised in that** it has means, such as a limit stroke detector, which enables the downward movement of the drilling screw and of the coring plunger tube to be stopped at a predetermined height in relation to the head of the broccoli or cauliflower laid on a supporting bowl.
